# EUROPEAN PATENT SPECIFICATION

(11) **EP 3 111 804 B1**
(45) Date of publication and mention of the grant of the patent: **25.10.2017**
(21) Application number: 16177614.1
(22) Date of filing: 01.07.2016
(51) Int. Cl.: A47B 96/06, F16B 12/14, F16B 12/20, F16B 12/46, F16B 5/02

(54) **CONCEALABLE CONNECTION DEVICE FOR FURNITURE**
VERSTECKBARE VERBINDUNGSVORRICHTUNG FÜR MÖBEL
DISPOSITIF DE RACCORDEMENT ESCAMOTABLE POUR MEUBLE

(30) Priority: 03.07.2015 IT UB20151965
(43) Date of publication of application: 04.01.2017
(73) Proprietor: O.M.M. Srl dell'Ing. Roberto Natale Mariani, 20832 Desio (MB) (IT)
(72) Inventor: MARIANI, Roberto, 20832 Desio (MB) (IT)
(74) Representative: Colombo, Stefano Paolo

(56) References cited:
- WO-A2-2008/076089
- ES-A1- 2 247 908
- FR-A3- 2 718 497
- US-A- 5 743 670

## Description

### Field of the invention

The present invention relates to a connection device for fastening together two panels of an item of furniture or the like, typically two panels which are perpendicular to each other.

### Prior art

As is known, an item of furniture such as a furniture unit typically comprises two vertical panels (commonly called "flanks" or "shoulders"), a horizontal bottom panel (commonly called "base") and a top panel which is also horizontal (commonly called "lid"). Furthermore, the furniture unit may comprise a number of horizontal intermediate panels, otherwise called "shelves".

During assembly of the furniture unit, the shoulders are typically fastened to the bottom panel and to the top panel, together with an optional lightweight back panel. The intermediate panels are usually fastened to the shoulders of the furniture unit so as to form shelves or in order to reinforce the furniture unit. While assembly of the shoulders and end panels may be performed easily enough, forming a kind of box-like structure, fixing the intermediate shelves gives rise to problems and requires specific design solutions.

In order to be able to stably fasten the shelves to the flanks, often connection devices similar to those used for joining together the end surfaces and the flanks are used. These devices are generally in the form of pegs or pins, which must be fixed first to the flanks and then inserted inside holes formed in the thickness of the shelves and aligned with the main shelf surface.

Examples of these devices are described in IT1326283 or EP2487373, in the name of the same Applicant. These devices typically comprise a pin which terminates, on one side, in a shank to be inserted with force or screwed into a suitable hole in a panel and, on the other side, in an engaging head with an adjusting dowel or other locking bush.

In the case where a threaded shank is provided, assembly is necessarily performed by screwing firstly the shank into the panel and then, with the pin mounted projecting, completing joining together with the other panel by inserting the dowel or the locking bush. The latter is typically inserted inside a broad receiving seat and is adjusted by operating it in a direction perpendicular to the axis of the pin.

Another solution consists instead in assembling a pin in the thickness of a panel, in a direction aligned with the larger surface, defining an actuating head embedded in the panel and accessible by a fixing tool and leaving, projecting outwards, a threaded shank which must be engaged with a threaded hole perpendicular to the other panel. In this case, assembly is obtained by rotating the pin itself, operating the actuating head and thus screwing the threaded shank into the hole. An example of this solution is described in IT1244382, on which the preamble of attached main claim is based.

WO 2008/076089 A2 and US 5,743,670 A describe joining devices for fastening together two panels of a furniture unit or the like. The known devices are efficient and compact. However, the Applicant has noticed that sometimes there is an assembly need which cannot be satisfied by the devices of the prior art. In fact in the latter devices a portion of the pin always remains projecting from one of the panels: assembly must therefore be performed by moving the two panels towards each other and not by means of relative sliding. This prevents assembly of the intermediate shelves on the furniture unit, or the addition of further shelves, if the two flanks are at a fixed distance (for example because they are already fastened to the bottom and top panels).

Hitherto, the only way of assembling the intermediate panels with the flanks at a fixed distance is to rest them on top of small pins projecting perpendicularly from the said flanks. However it is not possible to perform assembly with the joining devices completely embedded in the thickness of the panels.

The object of the present invention is therefore to provide a connection device for fastening together two panels of a furniture unit or the like, in which it is possible to conceal entirely from view the device itself, while allowing the assembly of horizontal panels between the two flanks by means of sliding, namely by inserting the horizontal panel even when the two flanks are at a fixed distance.

### Short description of the invention

This object is achieved with a connection device, the essential components of which are described in the attached main claim. Other preferred aspects of the device are described in the dependent claims.

In particular, according to a first aspect of the invention, a connection device for connecting a first panel to a second panel is described, the device comprising a substantially hollow fixing body within which a bushing is rotatably mounted, said bushing being provided with at least one threaded pin projecting from a distal end of said fixing body, the latter also housing a control gearing rotatably engaged with said bushing for transmitting a driving movement, wherein said threaded pin of the bushing is mounted axially translatable within said fixing body in opposition to an elastic element, axial release means which maintain a rotational engagement being provided between said control gearing and said threaded pin.

Preferably, said rotatable control gearing has a rotation axis perpendicular to the rotation axis of said threaded pin.

The bushing is formed by a metal cylinder provided with a first externally threaded portion corresponding to said threaded pin and a second externally threaded portion, between which a shoulder ring may be provided. The bushing is kept pushed towards a distal end of said hollow body by means of said elastic element, with said shoulder ring in abutment against a step inside said body.

Preferably, the elastic element is in the form of a spring arranged compressed between a fixed shoulder inside said hollow body and a mobile ring screwed onto said second externally threaded portion.

The bushing may be provided with an axial hole having a polygonal or in any case non-circular cross-section, in which a stem of an actuating pin rotatably operated by said control gearing is engaged in a freely translatable but rotationally integral manner.

In embodiments, the control gearing consists of a pin terminating in a conical sprocket, said pin having at least one axial polygonal seat adapted to be engaged by an operating tool.

### Brief description of the figures

Further characteristic features and advantages of the system according to the invention will in any case emerge more clearly from the detailed description which follows of a preferred embodiment thereof, provided by way of example and illustrated in the attached drawings in which:
- Fig. 1: is an exploded view of the device according to the invention;
- Figs. 2A and 2B: are, respectively, a plan view and a front elevation view of a first half-shell of the device according to Fig. 1;
- Figs. 3A and 3B: are, respectively, a plan view and a front elevation view of a second half-shell of the device according to Fig. 1;
- Fig. 4: is an exploded side elevation view of the transmission mechanism according to the invention;
- Fig. 5A: is a side elevation view of the threaded bushing of the device according to Fig. 1;
- Fig. 5B: is a cross-sectional view along the line B-B of Fig. 5A;
- Figs. 5C and 5D: are front elevation and rear elevation views of the bushing according to Fig. 5A;
- Fig. 6: is a side elevation view of the device according to the invention in the assembled condition;
- Fig. 7: is a partially sectioned view of a possible mode of assembly of the device according to Fig. 6;
- Fig. 8: is a plan view of a half-shell of Fig. 2A in which the mechanism according to Fig. 4 and the bushing according to Fig. 5A are installed;
- Fig. 8A: is a cross-sectional view along the line A-A of Fig. 8; and
- Figs. 9A-9C: are partially sectioned views of three stages of assembly of two panels provided with the device according to the invention.

### Description of an embodiment

For easier illustration, below in the present description and in the claims, the connection device will also be referred to simply as "device". Moreover, in the continuation of the present description, by way of a non-limiting example, reference will be made to the use of the connection device for fastening a horizontal panel (for example a shelf) to a flank of a furniture unit, but this is not to be regarded as limiting.

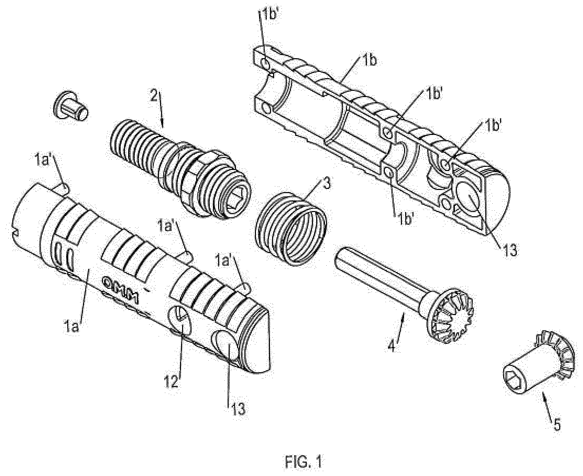

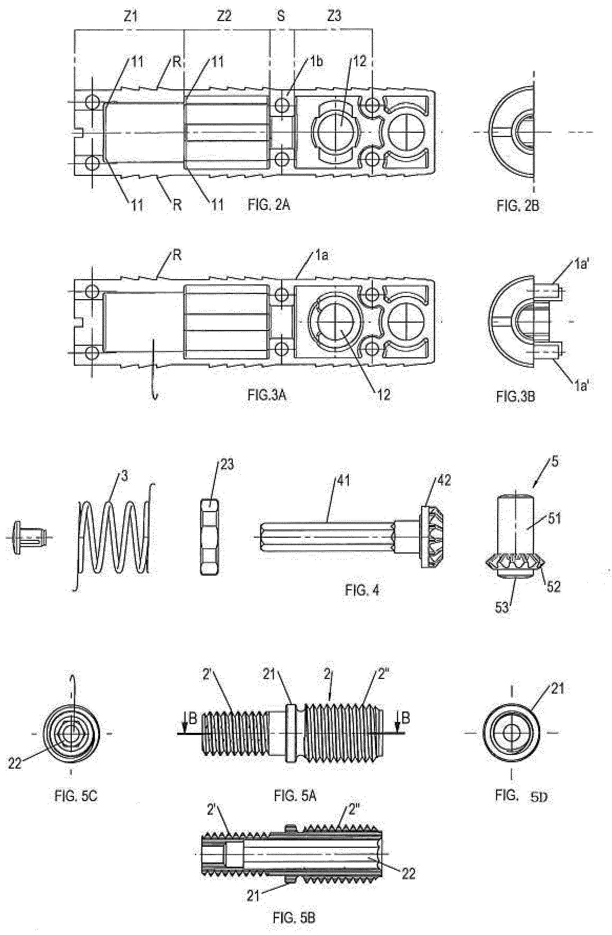

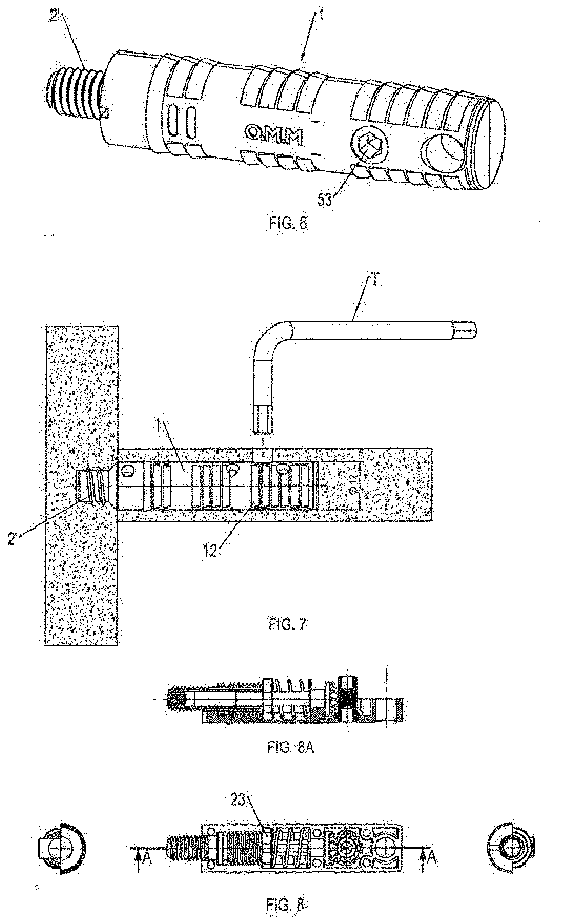

Fig. 1 shows an exploded view of a connection device according to the invention. It consists of a substantially cylindrical box-like body 1 divided up longitudinally into two half-portions 1a and 1b intended to be joined together. For this purpose, one half-portion 1a is provided with retaining pins 1a', while the other half-portion 1b is provided with corresponding engaging holes 1b'. The outer surface of the cylindrical body 1, as can be seen more clearly in Fig. 6 and in the cross-sections of Figs. 2A and 3A, has retaining means, such as ribs, reliefs or shaped teeth R which help establish an interference fit between the cylindrical body 1 and a respective receiving hole F in a furnishing element, such as a shelf.

In order to fix better the cylindrical body 1 inside a furniture component it is possible to provide also transverse fixing elements (not shown) which are inserted inside a transverse hole 13 formed at the proximal end of the cylindrical body.

The box-like body 1 has moreover an internal space, with various transverse spans (diameters) and consequent shoulders, which houses a threaded bushing 2, an elastic spring 3, an actuating pin 4 and a control gearing 5.

For this purpose, the internal space of the cylindrical body has, in sequence from the distal end (i.e. left-hand end in Fig. 2A):
- a first cylindrical exit zone z1,
- a second larger-diameter zone z2 for housing the spring 3, which terminates in a shoulder section S provided with a through-hole having a smaller diameter,
- a third zone for housing the control gearing 5.

The threaded bushing 2 consists of a metal cylinder provided with a first externally threaded portion 2' and a second externally threaded portion 2", on either side of a shoulder ring 21. The bushing 2 is provided with an axial hole 22 having a polygonal or in any case non-circular cross-section. The bushing 2 is housed inside the first exit zone z1 and in the second zone z2 of the internal cavity of the body 1. In particular, the bushing 2 is inserted with a certain axial play inside the cavity of the cylindrical body 1 and the end-of-travel towards the distal end (left-hand end in the figures) is determined by the shoulder ring 21 which comes into abutment against a step 11 formed between the first exit zone z1 and a smaller-diameter exit hole. In this end-of-travel position most of the first threaded portion 2' of the bushing 2 projects axially from the cylindrical body 1.

The bushing 2 is kept pushed towards the distal end of the body 1, with the shoulder ring 21 in abutment against the step 11, by means of the spring 3, which is in turn arranged compressed between the shoulder S of the internal cavity and a mobile ring 23; the latter is screwed more or less fully onto the second externally threaded portion 2" of the bushing 2.

The actuating pin (Fig. 4) consists of a stem 41 with a polygonal (or in any case non-circular) cross-section, said cross-section being suitable for engagement with axial play inside the polygonal hole 22, the end of the stem having fixed thereto endwise a first conical sprocket 42; said sprocket is mounted with its axis of symmetry coinciding with the longitudinal axis of the stem 41.

The actuating pin is intended to cause rotation of the bushing 2 by means of rotational engagement, but with freedom of relative axial translation of the stem 41 and the axial hole 22.

Finally, the control gearing 5 consists of a hollow pin 51 terminating in a second conical sprocket 52 also mounted on the end thereof. The hollow pin 51 has at least one polygonal seat 53, or better two at the two opposite ends, adapted to be engaged by an operating tool, for example a classic Allen key T.

The overall assembly of the various components inside the cavity of the cylindrical body 1 is clearly illustrated in Figs. 8 and 8A. The bushing 2 is kept inside its seat, freely rotatably, with the first threaded portion 2' pushed outside of the cylindrical body 1 by means of the spring 3. The stem 41 is inserted inside the hole 22 and the pin 4 is supported rotationally inside the through-hole of the shoulder S. The first conical sprocket 42 of the actuating pin 4 is accommodated inside the third housing zone z3, in abutment against the shoulder S. The control gearing 5 is arranged so as to cause the second conical wheel 52 to engage with the first conical wheel 42 of the pin 4; in this way, the rotation axis of the control gearing 5 is situated perpendicular to the longitudinal axis of the stem 41 and the bushing 2.

In axial alignment with the hollow pin 51, the cylindrical body 1 has through-holes 12 which allow access to the polygonal seats 53, so as to be able to rotate the control gearing 5 by means of the tool T. The rotation of the control gearing 5, by means of engagement with the actuating pin 4, in turn rotationally engaged with the bushing 2, causes a corresponding rotation of the first threaded portion 2' outside of the device.

Owing to this configuration, it is possible to cause rotation of a threaded pin (the portion 2') projecting from the connection device, by operating a tool perpendicularly relative to the axis of the device. Moreover, what is peculiar to the present invention, the threaded pin 2' is mounted so as to be able to be retracted axially inside the cylindrical body 1. In fact, as mentioned, the bushing 2 is housed inside the cavity of the body 2 with a certain axial play, which is taken up by the spring 3. By pushing the outer end of the first threaded portion 2', it is possible to overcome the elastic reaction of the spring 3 and push the threaded bush 2 towards the inside of the cavity of the cylindrical body 1 (namely towards the right in Figs. 8 and 8A); the spring is compressed and the bushing slides freely on the pin 4, while continuing to remain engaged with it rotationally.

During operation of the device the cylindrical body 1 is inserted completely inside the thickness of a first furniture component, for example a shelf (Fig. 7), allowing the outward projection of only the first threaded portion 2' of the bushing 2, namely the part intended to engage with a corresponding threaded seat V of a second furniture component, for example a flank. In the first furniture component, it is ensured that a small hole is provided opposite the hole or holes 12 in the cylindrical body 1, such that the tool T may reach the polygonal seat of the control member 5.

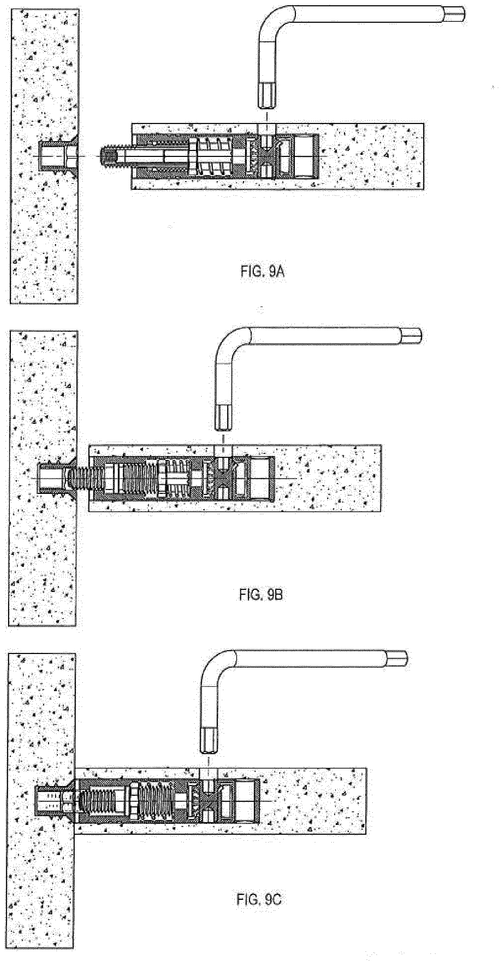

When the two furniture parts must be firmly fixed together, the tool T is used to cause rotation of the threaded outer portion 2' and complete the screw/female thread connection of the device with the threaded seat V (Figs. 9A-9C). In the case where the two furniture parts must be moved together by means of sliding, without any manoeuvring space (as usually occurs in the case of the shelves mounted between two fixed flanks), the external threaded portion 2' may be easily retracted inside the cylindrical body 1 - overcoming the elastic reaction of the spring 3 - so as to not to hinder the assembly operation. Once the shelf has been arranged in the desired position, the threaded portion 2' will be free to project out from the cylindrical body 1 and engage inside the threaded seat V, which will have been provided in alignment in the desired position on the flank.

As can be understood, the device according to the invention achieves perfectly the objects mentioned in the introduction. The connection device is in fact accommodated within the thickness of the furniture component, being fully concealed from view and leaving only a threaded pin exposed. Despite this, it is possible to fix together firmly the furniture components since the threaded pin may be operated with a tool from a direction perpendicular to the longitudinal axis of the device, and therefore in a direction which is easily accessible. Moreover, the threaded pin is designed to be retractable, so that it is possible to assemble a shelf between two other fixed components which allow assembly only by means of a sliding action and not by directly moving them together.

It is understood, however, that the invention is not limited to the particular configuration illustrated above, which forms only a non-limiting example of the scope of the invention, but that numerous variants are possible, all within the competence of a person skilled in the art, without thereby departing from the scope of the invention itself, as defined in the claims which follow.

For example, although reference has always been made to a cylindrical body, the device may also assume other external forms, which may be suitable for a different assembly arrangement.

## Claims

1. A connection device for connecting a first panel to a second panel, the device comprising:
a substantially hollow fixing body (1),
a bushing (2) rotatably mounted within said fixing body (1), said bushing (2) comprising at least one threaded pin (2') projecting from a distal end of said fixing body (1), and
a control gearing (5) housed inside said fixing body (1) and rotatably engaged with said bushing (2) for transmitting a driving movement,
wherein said threaded pin (2') is mounted axially translatable within said fixing body (1) in opposition to a spring (3), axial release means which maintain a rotational engagement being provided between said control gearing (5) and said threaded pin (2'),
wherein said bushing (2) comprises a metal cylinder provided with a first externally threaded portion corresponding to said threaded pin (2') and a second externally threaded portion (2"), and
wherein said spring (3) is arranged compressed between a fixed shoulder (S) inside said fixing body (1) and a mobile ring (23) screwed onto said second externally threaded portion (2").

2. The device according to claim 1, wherein said rotatable control gearing (5) has a rotation axis perpendicular to the rotation axis of said threaded pin (2').

3. The device according to claim 1 or 2, wherein said bushing (2) also comprises a shoulder ring (21) between said first externally threaded portion (2') and said second externally threaded portion (2").

4. The device according to claim 3, wherein said bushing (2) is kept pushed towards a distal end of said hollow body (1) by means of said elastic element (3), with said shoulder ring (21) in abutment against a step (11) inside said body (1).

5. The device according to any one of the preceding claims, wherein said bushing (2) is provided with an axial hole (22) having a polygonal or in any case non-circular cross-section, in which a stem (41) of an actuating pin (4) rotatably operated by said control gearing (5) is engaged in a freely translatable but rotationally integral manner.

6. The device according to any one of the preceding claims, wherein said control gearing (5) comprises a pin terminating in a conical sprocket (52), said pin (51) comprising at least one axial polygonal seat (53) adapted to be engaged by an operating tool (T).

## Patentansprüche

1. Verbindungsvorrichtung zum Verbinden einer ersten Platte mit einer zweiten Platte, wobei die Vorrichtung aufweist:
einen im Wesentlichen hohlen Befestigungskörper (1),
eine Hülse (2), welche drehbar in dem Befestigungskörper (1) angebracht ist, wobei die Hülse (2) mindestens einen Gewindestift (2') aufweist, welcher von einem distalen Ende des Befestigungskörpers (1) vorsteht, und
ein Bediengetriebe (5), welches im Inneren des Befestigungskörpers (1) eingehaust ist und mit der Hülse (2) zum Übertragen eines Antriebsmoments drehbar in Eingriff steht,
wobei der Gewindestift (2') im Gegensatz zu einer Feder (3) axial verschiebbar in dem Befestigungskörper (1) angebracht ist, wobei zwischen dem Bediengetriebe (5) und dem Gewindestift (2') axiale Freigabemittel vorgesehen sind, welche eine Drehineingriffnahme aufrecht erhalten,
wobei die Hülse (2) einen metallischen Zylinder aufweist, welcher mit einem ersten äußeren Gewindebereich, der dem Gewindestift (2') entspricht, und einem zweiten äußeren Gewindebereich (2") vorgesehen ist, und
wobei die Feder (3) zusammengedrückt zwischen einer festen Schulter (S) im Inneren des Befestigungskörpers (1) und einem mobilen Ring (23) angeordnet ist, welcher auf den zweiten äußeren Gewindebereich (2") geschraubt ist.

2. Vorrichtung nach Anspruch 1,
wobei das drehbare Bediengetriebe (5) eine Rotationsachse hat, welche senkrecht zur Rotationsachse des Gewindestifts (2') ist.

3. Vorrichtung nach Anspruch 1 oder 2,
wobei die Hülse (2) auch einen Schulterring (21) zwischen dem ersten äußeren Gewindebereich (2') und dem zweiten äußeren Gewindebereich (2") aufweist.

4. Vorrichtung nach Anspruch 3,
wobei die Hülse (2) durch das elastische Element (3) in Richtung eines distalen Endes des hohlen Körpers (1) gedrückt gehalten wird, wobei sich der Schulterring (21) gegen eine Stufe (11) im Inneren des Körpers (1) abstützt.

5. Vorrichtung nach einem der vorherigen Ansprüche,
wobei die Hülse (2) mit einer Axialbohrung (22) vorgesehen ist, welche einen polygonalen oder jedenfalls einen nicht kreisförmigen Querschnitt hat und in welche ein Schaft (41) eines Betätigungsstifts (4), welcher durch das Bediengetriebe (5) drehend angetrieben wird, in einer frei verschiebbaren jedoch drehfesten Weise eingreift.

6. Vorrichtung nach einem der vorherigen Ansprüche,
wobei das Bediengetriebe (5) einen Stift aufweist, welcher in einem konischen Ritzel (52) endet, wobei der Stift (51) mindestens eine axiale polygonale Aufnahme (53) aufweist, welche ausgebildet ist, um von einem Bedienwerkzeug (T) in Eingriff genommen zu werden.

## Revendications

1. Dispositif de raccordement pour raccorder un premier panneau à un second panneau, le dispositif comprenant :
un corps de fixation (1) sensiblement creux,
une douille (2) montée, en rotation, à l'intérieur dudit corps de fixation (1), ladite douille (2) comprenant au moins une broche filetée (2') faisant saillie d'une extrémité distale dudit corps de fixation (1), et
l'engrenage de commande (5) logé à l'intérieur dudit corps de fixation (1) et mis en prise, en rotation, avec ladite douille (2) pour transmettre un mouvement d'entraînement,
dans lequel ladite broche filetée (2') est montée par translation axiale à l'intérieur dudit corps de fixation (1) en opposition à un ressort (3), des moyens de libération axiaux qui maintiennent une mise en prise de rotation étant prévus entre ledit engrenage de commande (5) et ladite broche filetée (2'),
dans lequel ladite douille (2) comprend un cylindre métallique prévu avec une première partie extérieurement filetée correspondant à ladite broche filetée (2') et une seconde partie extérieurement filetée (2"), et
dans lequel ledit ressort (3) est agencé, comprimé entre un épaulement fixe (S) à l'intérieur dudit corps de fixation (1) et une bague mobile (23) vissée sur ladite seconde partie extérieurement filetée (2').

2. Dispositif selon la revendication 1, dans lequel ledit engrenage de commande rotatif (5) a un axe de rotation perpendiculaire à l'axe de rotation de ladite broche filetée (2').

3. Dispositif selon la revendication 1 ou 2, dans lequel ladite douille (2) comprend également une bague d'épaulement (21) entre ladite première partie extérieurement filetée (2') et ladite seconde partie extérieurement filetée (2").

4. Dispositif selon la revendication 3, dans lequel ladite douille (2) est maintenue poussée vers une extrémité distale dudit corps creux (1) au moyen dudit élément élastique (3), avec ladite bague d'épaulement (21) en butée contre un échelon (11) à l'intérieur dudit corps (1).

5. Dispositif selon l'une quelconque des revendications précédentes, dans lequel ladite douille (2) est prévue avec un trou axial (22) ayant une section transversale polygonale ou dans n'importe quel autre cas non circulaire, dans laquelle une tige (41) d'une broche d'actionnement (4) actionnée, en rotation, par ledit engrenage de commande (5), est mise en prise par translation libre mais solidaire en rotation.

6. Dispositif selon l'une quelconque des revendications précédentes, dans lequel ledit engrenage de commande (5) comprend une broche se terminant par un pignon conique (52), ladite broche (51) comprenant au moins un siège polygonal axial (53) adapté pour être mis en prise avec un outil de commande (T).
